# EUROPÄISCHE PATENTSCHRIFT

(11) **EP 1 269 011 B1**
(45) Veröffentlichungstag und Bekanntmachung des Hinweises auf die Patenterteilung: **21.06.2006**
(21) Anmeldenummer: 01913615.9
(22) Anmeldetag: 13.02.2001
(51) Int. Cl.: F02P 5/15

(54) **VERFAHREN UND VORRICHTUNG ZUR STEUERUNG DES LEERLAUFS EINER ANTRIEBSEINHEIT**
METHOD AND DEVICE FOR CONTROLLING THE IDLE OPERATION OF A DRIVE UNIT
PROCEDE ET DISPOSITIF DE COMMANDE DU FONCTIONNEMENT AU RALENTI D'UNE UNITE D'ENTRAINEMENT

(30) Priorität: 28.03.2000 DE 10015321
(43) Veröffentlichungstag der Anmeldung: 02.01.2003
(73) Patentinhaber: ROBERT BOSCH GMBH, 70442 Stuttgart (DE)
(72) Erfinder: KUSTOSCH, Mario, 71706 Markgroeningen (DE)
(86) Internationale Anmeldenummer: PCT/DE2001/000533
(87) Internationale Veröffentlichungsnummer: WO 2001/073288

(56) Entgegenhaltungen:
- EP-A- 0 033 616
- EP-A- 0 077 997
- EP-A- 0 518 289
- EP-A- 1 010 880
- DE-A- 19 740 186
- DE-A- 19 740 699

## Beschreibung

### Stand der Technik

Die Erfindung betrifft ein Verfahren und eine Vorrichtung zur Steuerung des Leerlaufs einer Antriebseinheit.

Ein derartiges Verfahren bzw. eine derartige Vorrichtung ist beispielsweise aus der EP 33 616 A1 bekannt Dort wird ein Leerlaufdrehzahlregler vorgeschlagen, welcher abhängig von der Abweichung der gemessenen Motordrehzahl von einem vorgegebenen Sollwert zur Annäherung der Drehzahl an die vorgegebene Solldrehzahl über einen ersten Eingriffspfad die Luftzufuhr zu einer Brennkraftmaschine, über einen zweiten Eingriffspfad den Zündwinkel der Brennkraftmaschine beeinflusst.

Aus der EP 1 010 880 A2 ist eine Vorrichtung zur Steuerung einer Brennkraftmaschine bekannt, bei der eine aktuelle Motordrehzahl im Rahmen einer Drehzahlregelung einer Sollmotordrehzahl nachgeführt wird. Im Falle einer Spätverstellung des Zündwinkels wird die Regelverstärkung verringert. Im Falle einer Frühverstellung des Zündwinkels wird die Regelverstärkung erhöht.

Neben der komfortablen, genauen Drehzahlregelung im Leerlauf ist es Ziel moderner Steuersysteme von Brennkraftmaschinen, den zur Abgasreinigung eingesetzten Katalysator möglichst früh konvertierungsfähig zu machen, um bereits in der Startphase der Brennkraftmaschine oder kurz danach einen voll funktionsfähigen Katalysator mit den entsprechenden Vorteilen zu haben. Aus diesem Grund muss der Katalysator schnell auf Betriebstemperatur gebracht werden. Dazu gibt es mehrere Konzepte. Eines davon ist die Heizung des Katalysators mit Sekundärluft. Dabei wird durch Hinzufügen von Frischluft zu einem unvollständig verbranntem Gemisch im Abgas eine chemische Reaktion in Gang gesetzt. Dieser Prozess wird auch Exotherme genannt. Die Exotherme ist dabei stark abhängig von einem späten Zündzeitpunkt. Änderungen des Zündzeitpunkts, insbesondere Frühzündungen, können zu einem Abbruch der Exothermen führen. Eine solche Zündzeitpunktsbeeinflussung kann insbesondere in der Startphase durch den Leerlaufregler stattfinden, da dieser die zu regelnde Größe auf den Sollwert führen möchte.

Aus der EP 77 997 B1 ist ein Leerlaufdrehzahlregler bekannt, welcher wenigstens einen Proportionalanteil aufweist, dessen Ausgangssignal abhängig von der Drehzahlabweichung die Luftzufuhr zu einer Brennkraftmaschine beeinflusst. Zur Verbesserung der Funktionsweise des Leerlaufreglers wird die Drehzahlabweichung einem Totzonenglied zugeführt, welches in einem vorgegebenen Drehzahlbereich kein Ausgangssignal abgibt. Ist die Drehzahlabweichung in diesem Totzonenbereich, findet kein Reglereingriff statt. Die Größe des Totzonenbereichs ist dabei derart gewählt, dass er geringfügig größer als die natürliche Schwankungsbreite der Leerlaufdrehzahl ist. Dies trägt zu einer Beruhigung der Regelung und zu einer Verbesserung des Fahrkomforts bei.

Aus der DE 41 41 946 A1 ist eine Vorgehensweise zur Heizung eines Katalysators mittels Sekundärluft bekannt. Der Beginn und das Ende der Sekundärluftzuführung wird dabei zeitabhängig und/oder betriebsparameterabhängig vorgenommen. Beispielsweise wird die Sekundärluftzuführung und damit die Betriebsphase des Katalysatorheizens eingeleitet, wenn die Brennkraftmaschine gestartet wird oder nach Ablauf einer vorbestimmten Zeitspanne nach dem Start der Brennkraftmaschine oder abhängig vom Überschreiten eines vorgegebenen Schwellenwertes für die Motordrehzahl. Die Katalysatorheizphase wird beendet, wenn eine vorbestimmte Zeit nach dem Beginn der Phase abgelaufen ist, wobei die Zeitdauer abhängig von Drehzahl, Motorlast, der Summe der zugeführten Luftmasse oder einer Kombination der beiden Werte, von der bis dahin eingespritzten Kraftstoffmenge, der Temperatur der Brennkraftmaschine, der Temperatur des Katalysators und/oder der Temperatur der Ansaugluft sein kann.

### Vorteile der Erfindung

Mit den Merkmalen gemäß den unabhängigen Ansprüches 1 bzw. 7 wird der Einfluss der Leerlaufregelung auf den Zündzeitpunkt während der Katalysatorheizphase bzw. einem ausgewählten Teil davon unterdrückt oder eingeschränkt. Dadurch wird in vorteilhafter Weise eine Stabilisierung der Exothermen erreicht. Katalysatorheizfunktion und Leerlaufregler arbeiten nicht gegeneinander.

Besonders vorteilhaft ist, den Zündzeitpunkteinfluß des Leerlaufreglers nur in bestimmten Bereichen der zur regelnden Größe, z.B. Drehzahlbereiche, zu begrenzen. Auf diese Weise wird eine zufriedenstellende Stabilität der Leerlaufregelung, z.B. der Leerlaufdrehzahl, auch in diesem Betriebsbereich erreicht und ein Abwürgen des Motors verhindert, da insbesondere bei großen Regelabweichungen ein Zündzeitpunktseingriff weiterhin möglich ist.

In vorteilhafter Weise wird dies erreicht, indem die Größe des oder der Reglerparameter, insbesondere dessen Verstärkungsfaktors, in dem gewünschten Betriebsbereich vorzugsweise in einem vorgegebenen Drehzahlbereich auf kleine Werte gesetzt wird, vorzugsweise Null, während er für größere Abweichungen größere Werte annimmt. Dies wird in vorteilhafter weise mittels einer entsprechend vorgegebenen Kennlinie realisiert.

Ergebnis ist ein Kompromiss zwischen einer stabilen Exotherme und einem stabilen Leerlauf, der zu einem insgesamt zufriedenstellenden Betriebsverhalten der Steuerung der Antriebseinheit führt.

In vorteilhafter Weise wird diese Lösung nicht nur in Verbindung mit Katalysatorheizen eingesetzt, sondern ergänzend oder alternativ auch bei anderen Konzepten, bei denen ein später Zündzeitpunkt eine wesentliche Voraussetzung ist. Dies ist beispielsweise bei Steuerkonzepten der Fall, bei welchen im Warmlauf der Brennkraftmaschine ein mageres Gemisch zugeführt wird. Somit wird auch hier für die Dauer des Warmlaufes bzw. eines Teils davon der Einfluss der Leerlaufregelung auf den Zündzeitpunkt unterdrückt bzw. eingeschränkt.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Ablaufdiagramm eines Leerlaufdrehzahlreglers mit Luft- und Zündwinkeleingriff, während in den Figuren 2 und 3 anhand von Diagrammen die Auswirkung der Reglerparameterbeeinflussung an einem bevorzugten Ausführungsbeispiel dargestellt ist.

### Beschreibung von Ausführungsbeispielen

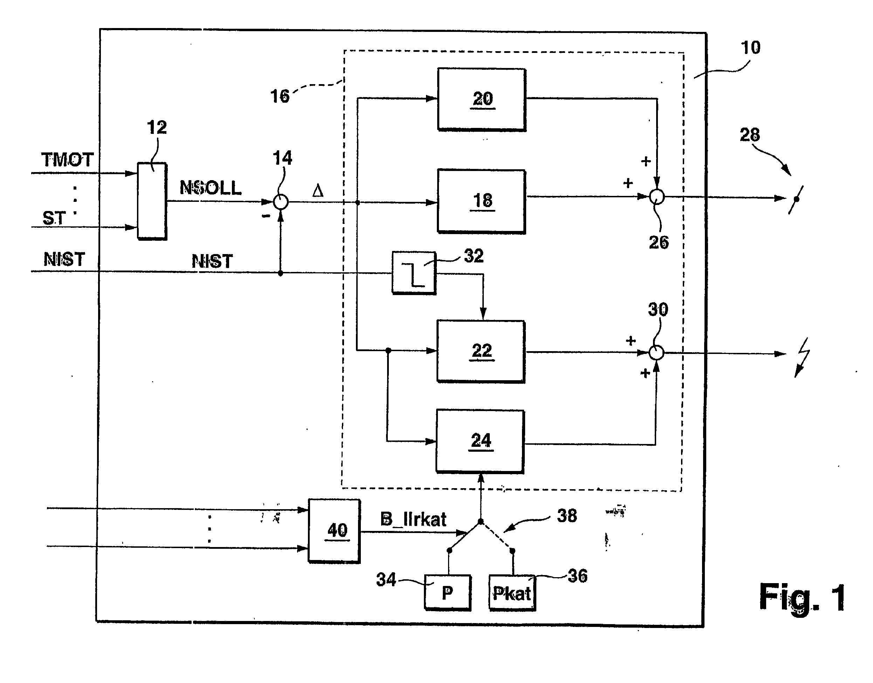

Figur 1 zeigt ein Ablaufdiagramm eines Leerlaufdrehzahlreglers, welcher sowohl die Luftzufuhr zu einer Brennkraftmaschine als auch deren Zündwinkel im Sinne einer Annäherung der Istdrehzahl an die Solldrehzahl beeinflusst. Im bevorzugten Ausführungsbeispiel stellt dieses Ablaufdiagramm ein Programm eines Mikroprozessors dar, welcher Teil einer Steuereinheit zur Steuerung der Brennkraftmaschine ist. Die gezeigten Blöcke stellen dabei Programme oder Programmschritte dar, die Verbindungsleitungen den Informationsfluss. Diese Steuereinheit bzw. dieser Mikroprozessor ist in Figur 1 mit 10 bezeichnet. Der Steuereinheit 10 bzw. dem Mikroprozessor 10 werden von entsprechenden, in Figur 1 aus Übersichtlichkeitsgründen nicht dargestellten Meßeinrichtungen Betriebsgrößen repräsentierende Signale zugeführt. Über eine erste Eingangsleitung wird ein die Motordrehzahl NIST repräsentierende Signalgröße zugeführt. Über weitere Eingangsgrößen werden Signale für weitere Betriebsgrößen des Motors bzw. des Fahrzeugs wie Motortemperatur TMOT, der Status ST von Nebenverbrauchern wie einer Klimaanlage, die Fahrzeuggeschwindigkeit VFZ, etc. zugeführt. Ferner erhält der Mikrocomputer bzw. die Steuereinheit 10 ein Signal über das Einschalten des Zündschalters (alternativ: Betätigen des Anlasser oder Einschaltsignal der Versorgungsspannung). Bei eingeschalteter Steuereinheit wird in einem Sollwertbilder 12 abhängig von zugeführten Betriebsgrößen wie z.B. der Motortemperatur und/oder dem Status wenigstens eines Nebenaggregats die Soll-Leerlaufdrehzahl NSOLL ermittelt. Dies erfolgt je nach Ausführungsbeispiel auf der Basis von Kennlinien, Kennfeldern, Tabellen oder Berechnungsschritten. Der Sollwertbilder 12 wird in bevorzugten Ausführungsbeispiel als ein Programm des Mikrocomputers 10 realisiert. In einer Vergleichsstelle 14 wird dann die Abweichung Δ zwischen der auf diese Weise gebildeten Soll-Leerlaufdrehzahl NSOLL und der erfassten Istdrehzahl NIST gebildet. Diese Regelabweichung wird dann dem gestrichelt eingezeichneten Leerlaufregler 16 zugeführt.

Dieser Leerlaufregler 16 besteht in einem bevorzugten Ausführungsbeispiel im wesentlichen aus einem herkömmlichen PID-Regler (einem Regler mit Proportional-, Differential- und Integralanteil), wobei wenigstens ein Anteil, vorzugsweise der P- und/oder der D-Anteil, doppelt ausgeführt sind. In der dargestellten Ausführung wirkt ein PID-Regler auf die Füllung (Luftzufuhr), ein PD-Regler (nur Proportional- und Differentialanteil) auf den Zündwinkel ein. In einem bevorzugten Ausführungsbeispiel ist der Differentialanteil für den Zündwinkelpfad nur bei Drehzahlen aktiv, die weit unterhalb der Leerlaufdrehzahl liegen. daher ist der Proportionalanteil für den Zündwinkelpfad für den Einfluss des Leerlaufreglers auf den Zündwinkel bestimmend. Im bevorzugten Ausführungsbeispiel wird das Ausgangssignal des Proportionalanteils gebildet aus dem Produkt der Drehzahlabweichung Δ mit einer Kennlinie. Diese Kennlinie ist abhängig von der Drehzahlabweichung, wobei der Parameter (Proportionalfaktor) der Kennlinie so gewählt ist, dass sich die Motordrehzahl stabil verhält. Dabei kann sich der Faktor abhängig von der Größe der Regelabweichung verändern. Der Faktor stellt die Steigung der Kennlinie dar. In anderen Ausführungen ist der D-Anteil in allen Drehzahlbereichen aktiv. Daneben werden in anderen Ausführungsbeispielen auch andere Reglertypen eingesetzt, wobei immer wenigstens ein veränderlicher Parameter, der einen Einfluss auf das dynamische Verhalten des Reglers hat, vorgesehen ist.

Die Regelabweichung wird im Ablaufdiagramm der Figur 1 einem Integralanteil 18, einem Proportional- und Differentialanteil 20, jeweils für den Luftpfad, einem Differentialanteil 22 und einem Proportionalanteil 24 für den Zündwinkelpfad zugeführt. In den einzelnen Reglerkomponenten wird die Regelabweichung entsprechend ausgewertet, im Integrator 18 integriert, in den Differentialanteilen differenziert und in den Proportionalanteilen wie beispielsweise oben dargelegt verstärkt. Die Ausgangssignale der Reglerkomponenten werden dabei jeweils für den Füllungs- und den Zündwinkelpfad zusammengeführt. So wird das Ausgangssignal des Integrators 18 und das Ausgangssignal des Proportional-/Differentialanteils 20 in der Verknüpfungsstelle 26 verknüpft (z.B. addiert) und als Ausgangssignal zur Steuerung der Luftzufuhr beispielsweise zu einer elektrisch betätigbare Drosselklappe 28 abgegeben. Entsprechend wird in einer Verknüpfungsstelle 30 das Ausgangssignal des Differentialanteils 22 und das des Proportionalanteils 24 für den Zündwinkelpfad verknüpft (z.B. addiert) und das resultierende Signal über eine Ausgangsleitung zur Einstellung des Zündwinkels ausgegeben, wobei das Ausgangssignal ein Korrektursignal für einen ggf. mit anderen Betriebsgrößen korrigierten Basiszündwinkel darstellt.

Ferner ist eine Schwellenwertstufe 32 vorgesehen, der ein die Motordrehzahl NIST repräsentierendes Signal zugeführt wird. Ist die Motordrehzahl sehr niedrig, gibt diese Schwellenwertstufe 32 ein Signal ab, welches den Differentialanteil 22 des Zündwinkelreglers aktiviert. Überschreitet die Motordrehzahl den in der Schwellenwertstufe 32 überprüften Schwellenwert, wird der Differentialanteil wieder deaktiviert.

Für den Proportionalanteil 24 des Zündwinkelreglers sind in Speicherzellen 34 und 36 zwei verschiedene Werte bzw. Kennlinien, eine für den Normalbetrieb und eine für die Katalysatorheizphase abgelegt. Ferner ist ein Schaltelement 38 vorgesehen, welches durch ein während der Katalysatorheizphase der Brennkraftmaschine aktives Signal B_LLRKAT von der durchgezogenen dargestellten Normalstellung in die gestrichelt dargestellte Startstellung umgeschaltet wird. Dieses Signal wird im Signalbilder 40 auf der Basis ausgewählter Betriebsgrößen gebildet. Im Signalbilder 40 wird auf der Basis wenigstens einer zugeführten Betriebsgröße, beispielsweise auf eine der im eingangs genannten Stand der Technik angegebenen Art und Weise, Beginn und Ende der Katalysatorheizphase bestimmt. Befindet sich das System in der Katalysatorheizphase wird vom Signalbilder 40 das entsprechende Signal ausgegeben und das Schaltelement 38 umgeschaltet. Während der Katalysatorheizphase wird also der Proportionalanteil des Zündwinkelreglers nach Maßgabe der im Speicherelement 36 abgelegten Verstärkung bzw. der dort abgelegten Kennlinie abhängig von der Drehzahlabweichung ermittelt, die sich von den Normalbetriebwerten darin unterscheidet, dass der Zündwinkeleinfluss des Reglers zumindest zum Teil unterdrückt bzw. eingeschränkt ist.

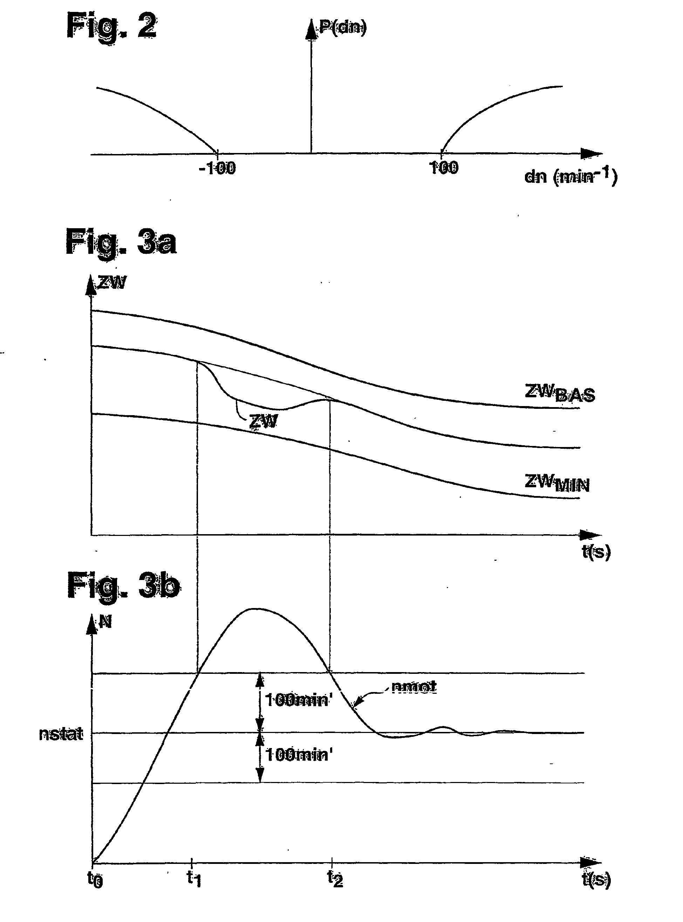

Ein Beispiel für die in der Speicherzelle 36 abgelegte Kennlinie ist in Figur 2 dargestellt. Diese Kennlinie gilt speziell für den Proportionalanteil des Zündwinkelreglers für die Betriebsphase des Katheizens. Während dieser Betriebsphase wird die Kennlinie alternativ zur Normalkennlinie, die in der Speicherzelle 34 abgelegt ist, verwendet. Sobald die Katheizphase beendet ist, was beispielsweise auf der Basis der im eingangs genannten Stand der Technik vorgestellten Vorgehensweise ermittelt wird, wird der normale Parametersatz zur Leerlaufregelung ausgewählt. Figur 2 zeigt den Verlauf des Verstärkungsfaktors P in Abhängigkeit von der Drehzahlabweichung DN (= Δ) zwischen Sollmotordrehzahl und Istmotordrehzahl. Zugunsten der Katheizfunktion wird diese Kennlinie so bedatet, dass der Verstärkungsfaktor innerhalb eines vorgegebenen Drehzahlbandes, beispielsweise zwischen -100 und 100 Umdrehungen pro Minute, Null beträgt. Dadurch bleibt der Verlauf des Zündwinkels innerhalb dieses Drehzahlbandes durch den Leerlaufregler unbeeinflusst. Ein_ruhiger Zündwinkelverlauf wiederum ermöglicht eine stabile Exotherme und stellt somit ein optimales Katheizen sicher. Außerhalb des vorgegebenen Drehzahlbandes nimmt der Verstärkungsfaktor P in einem bevorzugten Ausführungsbeispiel monoton zu, um die Stabilität der Leerlaufdrehzahl zu gewährleisten. Je größer die Regelabweichung ist, desto stärker ist die Wirksamkeit des Zündwinkeleingriffes. Dadurch wird eine zufriedenstellende Stabilität des Leerlaufs gewährleistet.

In anderen Ausführungsbeispielen hat es sich gezeigt, dass in dem vorgegebenen Drehzahlband ein kleiner Wert des Proportionalverstärkungsfaktor sinnvoll ist. Dadurch wird eine geringe Veränderung des Zündwinkels auch während aktiver Katheizfunktion erlaubt, so dass eine weitere Verbesserung der Stabilität des Leerlaufs ohne wesentliche Einschränkung der Katalysatorheizfunktion ermöglicht wird.

Weist der Zündwinkelregler neben einem Proportionalanteil einen auch im normalen Drehzahlbereich aktiven Differentialanteil und/oder einen Integralanteil auf, so sind entsprechende Kennlinien für den Katalysatorheizbetrieb auch für diese Anteile vorgesehen.

Die Kennlinie für den Verstärkungsfaktor im Normalbetrieb ist in einem bevorzugten Ausführungsbeispiel unabhängig von der Größe der Drehzahlabweichung, d.h. der Wert des verstärkungsfaktors ist für jede Größe der Drehzahlabweichung gleich. Ist auch hier eine Abhängigkeit von der Regelabweichung vorgesehen, sind zumindest im oben genannten Drehzahlbereich die Werte für den Verstärkungsfaktor größer als während des Sonderbetriebs.

Die Vorgabe eines speziellen Parametersatzes zumindest für den Proportionalanteil des Zündwinkelreglers eines Leerlaufreglers ist nicht nur auf die Katalysatorheizphase beschränkt, sondern wird in anderen Ausführungsbeispielen zusätzlich oder alternativ zur Katalysatorheizphase in allen den Betriebsphasen eingesetzt, in denen ein später Zündwinkel für die Funktion wesentlich ist, wie beispielsweise bei einem Warmlauf mit magerem Gemisch. In diesem Fall wird die vorstehend beschriebene Vorgehensweise während der Warmlaufphase oder für einen wesentlichen Teil der Warmlaufphase eingesetzt.

Das bevorzugte Ausführungsbeispiel betrifft einen Drehzahlregler. Anstelle der Drehzahl werden in anderen Ausführungen auch andere Größe geregelt, z.B. ein Drehmoment der Antriebseinheit, etc. In dieser Ausführung wird entsprechend die zu regelnde Größe (Moment, Leistung, etc.) erfaßt, mit einem Sollwert verglichen und abhängig von der Abweichung der Zündwinkel beeinflusst. Der wenigstens eine Parameter des Reglers wird dann analog zu Figur 2 zumindest in einem vorbestimmten Bereich der Abweichung entsprechend verringert, um die Wirkung des Reglers im Sonderbetriebszustand einzuschränken.

In Figur 3 sind Zeitverläufe des Zündwinkels ZW (Figur 3a) und der Motordrehzahl NMOT (Figur 3b) während der Startphase einer Brennkraftmaschine dargestellt. In der dargestellten Betriebsphase wird die oben beschriebene Katalysatorheizfunktion ausgeführt, so dass für den Zündwinkeleingriffsregler die in Figur 2 skizzierte Kennlinie eingesetzt wird. Der Zündwinkel befindet sich auf einem vorgegebenen Wert zwischen dem Basiszündwinkel ZWBAS und einem minimalen Zündwinkel ZWMIN (Figur 3a). Zum Zeitpunkt T0 steigt die Motordrehzahl an, tritt in den um die Soll-Leerlaufdrehzahl NSTAT gebildeten Drehzahlbereich ein (Figur 3b). In dieser Phase bleibt der Zündwinkel unverändert, da der Proportionalanteil entsprechend Figur 1 bestimmt wird und ein Zündwinkeleingriff ohnehin erst beim erstmaligen Überschreiten der Solldrehzahl aktiviert wird. Zum Zeitpunkt T1 verläßt die Motordrehzahl den Drehzahlbereich, so dass in diesem Zeitraum gemäß Figur 3a eine Veränderung des Zündwinkels in Richtung früh zur Verringerung des Drehzahlüberschwingers stattfindet. Zum Zeitpunkt T2 tritt die Drehzahl wieder in den Drehzahlbereich ein, in dem der Proportionalanteil inaktiv ist und bleibt im folgenden in diesem Drehzahlbereich (Figur 3b). Daher erfolgt ab dem Zeitpunkt T2 gemäß Figur 3a kein weiterer Zündwinkeleingriff.

## Patentansprüche

1. Verfahren zur Steuerung des Leerlaufs einer Antriebseinheit, wobei die Abweichung zwischen einer zu regelnden Größe der Antriebseinheit von einem vorgegebenen Wert für diese Größe gebildet wird, in deren Abhängigkeit mittels eines Reglers (16) mit wenigstens einem veränderlichen Parameter (P) ein den Zündwinkel der Antriebseinheit beeinflussendes Stellsignal erzeugt wird, wobei in Sonderbetriebsphasen, in denen eine Zündwinkelverstellung in Richtung früh unerwünscht ist, die Größe des wenigstens einen Parameters (P) des Reglers (16) gegenüber dem Normalbetrieb verändert ist, so dass die Wirkung des Reglers (16) auf den Zündwinkel zumindest eingeschränkt ist, **dadurch gekennzeichnet, dass** der wenigstens eine Parameter während der Sonderbetnebsphase oder für einen Teil dieser Phase wenigstens in einem vorgegebenen Bereich der Abweichung der zu regelnden Größe vom vorgegebenen Wert einen kleineren Wert als außerhalb aufweist.

2. Verfahren nach Anspruch 1, **dadurch gekennzeichnet, dass** die Betriebsphase die Katalysatorheizphase oder die Warmlaufphase einer Brennkraftmaschine, welche mit magerem Gemisch versorgt wird, ist.

3. Verfahren nach einem der vorhergehenden Ansprüche, **dadurch gekennzeichnet, dass** die zu regelnde Größe die Drehzahl der Antriebseinheit, ein Drehmoment der Antriebseinheit oder deren Leistung ist.

4. Verfahren nach einem der vorherigen Ansprüche, **dadurch gekennzeichnet, dass** der kleinere Wert Null ist.

5. Verfahren nach einem der vorherigen Ansprüche, **dadurch gekennzeichnet, dass** der vorgegebene Bereich ein vorgegebener Wertebereich der Abweichung um den Wert Null ist.

6. Verfahren nach einem der vorhergehenden Ansprüche, **dadurch gekennzeichnet, dass** nach Abschluss der Betriebsphase oder des Teils der Betriebsphase, in der der Parameter verändert ist, auf den im Normalbetrieb verwendeten Parameter umgeschaltet wird.

7. Vorrichtung zur Steuerung des Leerlaufs einer Antriebseinheit, mit einem Regler (16), welcher in Abhängigkeit der Abweichung einer zu regelnden Größe der Antriebseinheit von einer für diese Größe vorgegebenen Sollgöße eine den Zündwinkel der Antriebseinheit beeinflussende Stellgräße erzeugt und der Regler (16) wenigstens einen veränderlichen Parameter (P) aufweist, wobei dem Regler (16) Umschaltmittel (38) zugeordnet sind, die bei Vorliegen einer Sonderbetriebsphase, in der eine Verstellung des Zündwinkels in Richtung früh unerwünscht ist, den wenigstens einen Parameter (P) auf eine gegenüber dem Normalbetrieb veränderte Größe umschalten, so dass die Wirkung des Reglers (16) auf den Zündwinkel zumindest eingeschränkt ist, **dadurch gekennzeichnet, dass** der wenigstens eine Parameter während der Sonderbetriebsphase oder für einen Teil dieser Phase wenigstens in einem vorgegebenen Bereich der Abweichung der zu regelnden Größe von der vorgegebenen Sollgröße einen kleineren Wert als außerhalb aufweist.

## Claims

1. Method for controlling the idling of a drive unit, wherein the deviation of a drive unit variable to be regulated from a predefined value for this variable being formed and an actuation signal which influences the ignition angle of the drive unit being generated as a function of said value by means of a regulator (16) using at least one variable parameter (P), wherein, in special operation phases in which an ignition angle adjustment in the advanced direction is undesired the value of the at least one parameter (P) of the regulator (16) is changed in comparison with the normal operation so that the effect of the regulator (16) is at least restricted to the ignition angle, **characterized in that** the at least one parameter has a smaller value during the special operation phase or for part of this phase, at least in a predefined range of the deviation of the variable to be regulated from the predefined value, than outside.

2. Method according to Claim 1, **characterized in that** the operation phase is the catalytic converter heating phase or the warming up phase of an internal combustion engine which is supplied with lean mixture.

3. Method according to one of the preceding claims, **characterized in that** the variable to be regulated is the rotational speed of the drive unit, a torque of the drive unit or its power.

4. Method according to one of the preceding claims, **characterized in that** the smaller value is zero.

5. Method according to one of the preceding claims, **characterized in that** the predefined range is a predefined range of values of the deviation about the value zero.

6. Method according to one of the preceding claims, **characterized in that**, after the operation phase, or the part of the operation phase in which the parameter is changed, ends, the system is switched over to the parameter used during normal operation.

7. Device for controlling the idling of a drive unit, having a regulator (16) which, as a function of the deviation of a drive unit variable to be regulated from a setpoint value which is predefined for this variable, a manipulated variable which influences the ignition angle of the drive unit is generated and the regulator (16) has at least one variable parameter (P), wherein the regulator (16) is assigned switching means (38) which, when there is a special operation phase in which adjustment of the ignition angle in the advanced direction is undesired, switches over the at least one parameter (P) to a value which is changed in comparison with the normal operation so that the effect of the regulator (16) on the ignition angle is at least restricted, **characterized in that** the at least one parameter has a smaller value during the special operation phase or for part of this phase, at least in a predefined range of the deviation of the variable to be regulated from the predefined setpoint value, than outside.

## Revendications

1. Procédé de commande de la marche à vide d'une unité d'entraînement, selon lequel l'écart on forme entre une grandeur à réguler de l'unité d'entraînement et une valeur prédéfinie pour cette grandeur, un écart en fonction duquel un régulateur (16) crée au moins un paramètre variable (P) ayant un signal de réglage influençant l'angle d'allumage de l'unité d'entraînement, et dans des phases de fonctionnement particulières, dans lesquelles on souhaite un réglage de l'angle d'allumage dans le sens de l'avance, on modifie la grandeur du paramètre (P) du régulateur (16) par rapport au fonctionnement normal de sorte que l'effet du régulateur (16) sur l'angle d'allumage soit au moins limité,
**caractérisé en ce que**
pendant la phase de fonctionnement particulière ou pour une partie de cette phase, le paramètre présente au moins sur une plage prédéfinie de l'écart entre la grandeur à réguler et la valeur prédéfinie une valeur plus petite que hors de cette page.

2. Procédé selon la revendication 1,
**caractérisé en ce que**
la phase de fonctionnement est la phase de chauffage de catalyseur ou la phase d'échauffement d'un moteur à combustion interne alimenté en mélange pauvre.

3. Procédé selon l'une quelconque des revendications précédentes,
**caractérisé en ce que**
la grandeur à réguler est la vitesse de rotation de l'unité d'entraînement, un couple de rotation de l'unité d'entraînement ou sa puissance.

4. Procédé selon l'une quelconque des revendications précédentes,
**caractérisé en ce que**
la valeur plus petite est zéro.

5. Procédé selon l'une quelconque des revendications précédentes,
**caractérisé en ce que**
la plage prédéfinie est une plage de valeurs prédéfinie de l'écart autour de la valeur zéro.

6. Procédé selon l'une quelconque des revendications précédentes,
**caractérisé en ce qu'**
à la fin de la phase de fonctionnement ou d'une partie de la phase de fonctionnement dans laquelle le paramètre est modifié, on commute sur le paramètre utilisé en fonctionnement normal.

7. Dispositif de commande d'une marche à vide d'une unité d'entraînement, comprenant un régulateur (16) qui génère une grandeur de réglage influençant l'angle d'allumage de l'unité d'entraînement en fonction de l'écart entre une grandeur à réguler de l'unité d'entraînement et une grandeur de consigne prédéfinie pour cette grandeur, le régulateur (16) présentant au moins un paramètre (P) variable avec des moyens de commutation (38) associés au régulateur (16) et qui en présence d'une phase de fonctionnement particulière, dans laquelle un réglage de l'angle d'allumage dans la direction tôt est indésirable, commutent le paramètre (P) sur une grandeur modifiée par rapport au fonctionnement normal, de sorte que l'effet du régulateur (16) sur l'angle d'allumage soit au moins limité,
**caractérisé en ce que**
pendant la phase de fonctionnement particulière ou pour une partie de cette phase, le paramètre présente, au moins sur une plage prédéfinie de l'écart entre la grandeur à réguler et la grandeur de consigne prédéfinie une valeur plus petite que hors de cette plage.
